# EUROPEAN PATENT APPLICATION

(11) **EP 4 814 675 A1**
(43) Date of publication of application: **30.09.2026**
(21) Application number: 24904226.8
(22) Date of filing: 10.12.2024
(51) Int. Cl.: G06F 3/0482, G06F 1/16, A44C 5/00, G06F 3/0486, G06F 3/04817, G06F 3/0485, G06F 3/041, G06F 3/04842, G06F 3/0488

(54) **ELECTRONIC DEVICE COMPRISING FLEXIBLE DISPLAY, AND OPERATION METHOD THEREOF**

(30) Priority: 11.12.2023 KR 20230178602; 15.01.2024 KR 20240006074
(71) Applicant: Samsung Electronics Co., Ltd., Suwon-si, Gyeonggi-do 16677 (KR)
(72) Inventor: JO, Yeonho, Suwon-si Gyeonggi-do 16677 (KR); KIM, Jeongseob, Suwon-si Gyeonggi-do 16677 (KR); YOON, Sangil, Suwon-si Gyeonggi-do 16677 (KR); IM, Byungjai, Suwon-si Gyeonggi-do 16677 (KR); HAN, Yonggil, Suwon-si Gyeonggi-do 16677 (KR)
(74) Representative: Gulde & Partner
(86) International application number: PCT/KR2024/020133
(87) International publication number: WO 2025/127661

(57) **Abstract**

According to an embodiment, a wearable electronic device may comprise: a body part; a first band part; a second band part; a connection part configured to connect the first band part to the second band part; a flexible display; a processor; and a memory for storing instructions. According to the embodiment, the flexible display may comprise a first display area corresponding to the body part, a second display area corresponding to the first band part, and a third display area corresponding to the second band part. According to the embodiment, the instructions, when executed by the processor, may cause the wearable electronic device to display, via the flexible display, a list of objects arranged in a sequential order. According to the embodiment, the instructions, when executed by the processor, may cause the wearable electronic device to scroll the objects in the list displayed on the flexible display, in response to a user input. According to the embodiment, the instructions, when executed by the processor, may cause the wearable electronic device, when in a first state in which the first band is connected to the second band part via the connection part, to perform looped scrolling of the list, such that, on the basis of reaching the end of the list during scrolling of the objects, the beginning of the list is displayed following the end thereof. According to the embodiment, the instructions, when executed by the processor, may cause the wearable electronic device, when in a second state in which the first band is not connected to the second band part via the connection part, to stop scrolling of the object on the basis of reaching the end of the list during the scrolling of the objects.

## Description

### [Technical Field]

The disclosure relates to a wearable electronic device including a flexible display and an operation method thereof.

### [Background Art]

As communication technology advances, wearable electronic devices are becoming smaller and lighter enough to be used without significant discomfort even when worn on the user's body. For example, wearable electronic devices such as head-mounted display devices (HMDs), smartwatches (or bands), contact lens-type devices, ring-type devices, glove-type devices, shoe-type devices, or clothing-type devices are being commercialized. Since wearable electronic devices are worn directly on the body, portability and user accessibility may be improved.

Recently, in line with consumer trends that prioritize design, the convenience of use of wearable electronic devices is being given important consideration along with the external design of wearable electronic devices in the development of wearable electronic devices.

### [Detailed Description of the Invention]

### [Technical Problem]

### [Technical Solution]

According to an embodiment, a wearable electronic device may include a connection part, a sensor, a flexible display, a processor, and memory including instructions. According to an embodiment, the flexible display may include a first display area corresponding to the body part of the wearable electronic device, a second display area corresponding to the band part of the wearable electronic device, and a third display area, and one end of the second display area and one end of the third display may be connected to or separated from each other by the connection part. According to an embodiment, the instructions, when executed by the processor, may cause the wearable electronic device to display some of multiple objects arranged in a specified order on the flexible display. According to an embodiment, the multiple objects may include a first object corresponding to one end of the multiple objects and a second object corresponding to another end. According to an embodiment, the instructions, when executed by the processor, may cause the wearable electronic device to identify at least one user input to scroll objects displayed on the flexible display in a first direction. According to an embodiment, the instructions, when executed by the processor, may cause the wearable electronic device to identify whether scrolling to a previous portion of the first object or a next portion of the second object is requested by the at least one user input. According to an embodiment, the instructions, when executed by the processor, may cause the wearable electronic device to identify whether the form of the flexible display is a first form in which the second display area and the third display area are connected, or a second form in which the second display area and the third display area are separated, based on the identifying that scrolling to the previous portion of the first object or the next portion of the second object is requested. According to an embodiment, the instructions, when executed by the processor, may cause the wearable electronic device to scroll the multiple objects in the first direction based on the identifying that the flexible display is in the first form, so as to display the second object after the first object or the first object after the second object. According to an embodiment, the instructions, when executed by the processor, may cause the wearable electronic device to stop scrolling the multiple objects based on the identifying that the flexible display is in the second form.

According to an embodiment, in an operation method performed by a wearable electronic device including a flexible display, the flexible display may include a first display area corresponding to the body part of the wearable electronic device, a second display area corresponding to the band part of the wearable electronic device, and a third display area, and one end of the second display area and one end of the third display may be connected to or separated from each other by the connection part. The operation method performed by a wearable electronic device according to an embodiment may include an operation of displaying some of multiple objects arranged in a specified order on the flexible display. According to an embodiment, the multiple objects may include a first object corresponding to one end of the multiple objects and a second object corresponding to another end. The operation method performed by a wearable electronic device according to an embodiment may include an operation of identifying at least one user input to scroll the multiple objects displayed on the flexible display in a first direction. The operation method performed by a wearable electronic device according to an embodiment may include an operation of identifying whether scrolling to a previous portion of the first object or a next portion of the second object is requested by the at least one user input. The operation method performed by a wearable electronic device according to an embodiment may include an operation of identifying whether the form of the flexible display is a first form in which the second display area and the third display area are connected, or a second form in which the second display area and the third display area are separated, based on the identifying that scrolling to the previous portion of the first object or the next portion of the second object is requested. The operation method performed by a wearable electronic device according to an embodiment may include an operation of scrolling the multiple objects in the first direction based on the identifying that the flexible display is in the first form, so as to display the second object after the first object or the first object after the second object. The operation method performed by a wearable electronic device according to an embodiment may include an operation of stopping scrolling the multiple objects based on the identifying that the flexible display is in the second form.

According to an embodiment, a computer-readable non-temporary recording medium may store instructions that may perform an operation of displaying some of multiple objects arranged in a specified order on the flexible display, wherein the flexible display may include a first display area corresponding to the body part of the wearable electronic device, a second display area corresponding to the band part of the wearable electronic device, and a third display area, and one end of the second display area and one end of the third display may be connected to or separated from each other by the connection part, and wherein the multiple objects may include a first object corresponding to one end of the multiple objects and a second object corresponding to another end, an operation of identifying at least one user input to scroll the multiple objects displayed on the flexible display in a first direction, identifying whether scrolling to a previous portion of the first object or a next portion of the second object is requested by the at least one user input, identifying whether the form of the flexible display is a first form in which the second display area and the third display area are connected, or a second form in which the second display area and the third display area are separated, based on the identifying that scrolling to the previous portion of the first object or the next portion of the second object is requested, scrolling the multiple objects in the first direction based on the identifying that the flexible display is in the first form, so as to display the second object after the first object or the first object after the second object, and stopping scrolling the multiple objects based on the identifying that the flexible display is in the second form.

According to an embodiment, a wearable electronic device may include a body part, a first band part, a second band part, a connection part configured to connect the first band part to the second band part, a flexible display, a processor, and memory storing instructions. According to an embodiment, the flexible display may include a first display area corresponding to the body part, a second display area corresponding to the first band part, and a third display area corresponding to the second band part. According to an embodiment, the instructions, when executed by the processor, may cause the wearable electronic device to display, via the flexible display, a list of objects arranged in a sequential order. According to an embodiment, the instructions, when executed by the processor, may cause the wearable electronic device to scroll the objects in the list displayed on the flexible display, in response to a user input. According to an embodiment, the instructions, when executed by the processor, may cause the wearable electronic device to scroll in a loop to indicate the beginning of the list following the end of the list, based on reaching the end of the list while scrolling the objects when the wearable electronic device is in a first state in which the first band is connected to the second band via the connection part. According to an embodiment, the instructions, when executed by the processor, may cause the wearable electronic device to stop scrolling the objects based on reaching the end of the list while scrolling the objects when the wearable electronic device is in a second state in which the first band is separated from the second band via the connection part.

According to an embodiment, in an operation method performed by a wearable electronic device including a flexible display, the flexible display may include a first display area corresponding to the body part of the wearable electronic device, a second display area corresponding to the first band part of the wearable electronic device, and a third display area corresponding to the second band part of the wearable electronic device, and the first band part may be configured to be connected to the second band part via the connection part 270 of the wearable electronic device. According to an embodiment, the method performed by the wearable electronic device may include an operation of displaying, via the flexible display, a list of objects arranged in a sequential order. According to an embodiment, the method performed by the wearable electronic device may include an operation of scrolling the objects in the list displayed on the flexible display, in response to a user input. According to an embodiment, the method performed by the wearable electronic device may include an operation of scrolling in a loop to indicate the beginning of the list following the end of the list, based on reaching the end of the list while scrolling scroll the objects when the wearable electronic device is in a first state in which the first band is connected to the second band via the connection part. According to an embodiment, the method performed by the wearable electronic device may include an operation of stopping scroll the objects based on reaching the end of the list while scroll the objects when the wearable electronic device is in a second state in which the first band is separated from the second band via the connection part.

### [Advantageous Effects]

### [Brief Description of Drawings]

FIG. 1 is a block diagram of an electronic device in a network environment according to various embodiments.
FIG. 2A is a drawing illustrating a wearable electronic device according to an embodiment.
FIGS. 2B and 2C are drawings illustrating a first form and a second form of a flexible display included in a wearable electronic device according to an embodiment.
FIG. 3 is a block diagram illustrating components of a wearable electronic device according to an embodiment.
FIG. 4 is a flowchart illustrating a method for a wearable electronic device to scroll multiple objects by according to an embodiment.
FIG. 5 is a drawing illustrating multiple objects arranged in a specified order according to an embodiment.
FIG. 6A is a drawing illustrating a method for a wearable electronic device to display some of multiple objects when a flexible display is in a first form, according to an embodiment.
FIG. 6B is a drawing illustrating a method for a wearable electronic device to display some of multiple objects when a flexible display is in a second form, according to an embodiment.
FIGS. 7A and 7B are drawings illustrating a method for a wearable electronic device to scroll multiple objects when a flexible display is in a first form, according to an embodiment.
FIGS. 8A and 8B are drawings illustrating a method for a wearable electronic device to scroll multiple objects when a flexible display is in a first form, according to an embodiment.
FIG. 9 is a flowchart illustrating a method for a wearable electronic device to output information indicating a point corresponding to an end of multiple objects, according to an embodiment.
FIGS. 10A and 10B are drawings illustrating a method for a wearable electronic device to output information indicating a point corresponding to an end of multiple objects, according to an embodiment.
FIG. 11 is a drawing illustrating a method for a wearable electronic device to display information indicating a point corresponding to an end of multiple objects, according to an embodiment.
FIG. 12 is a flowchart illustrating a method for a wearable electronic device to reduce the size of an object close to a connection part among multiple objects, according to an embodiment.
FIG. 13 is a drawing illustrating a method for a wearable electronic device to reduce the size of an object close to a connection part among multiple objects, according to an embodiment.
FIG. 14 is a flowchart illustrating a method for a wearable electronic device to display at least one image representing at least one object corresponding to the next sequence of a third object close to a connection part among multiple objects.
FIGS. 15A and 15B are drawings illustrating a method for a wearable electronic device to display at least one image representing at least one object corresponding to the next sequence of a third object close to a connection part among multiple objects.

### [Mode for Carrying out the Invention]

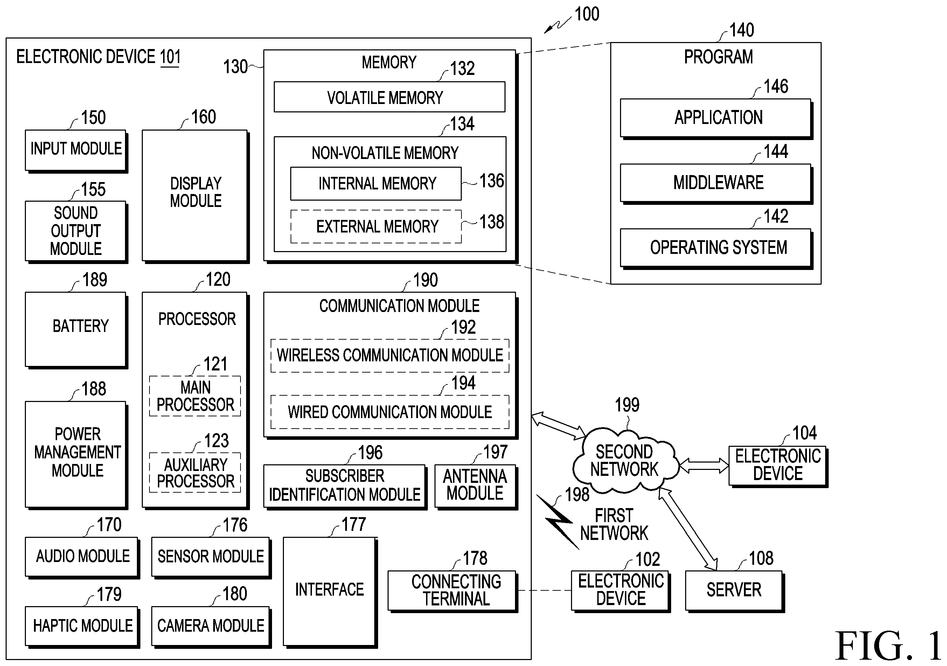

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{TM}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

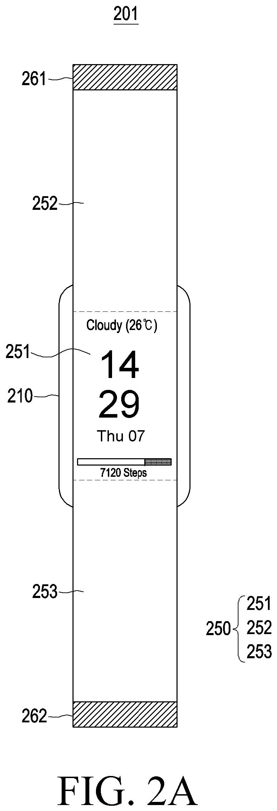

FIG. 2A is a drawing illustrating a wearable electronic device according to an embodiment.

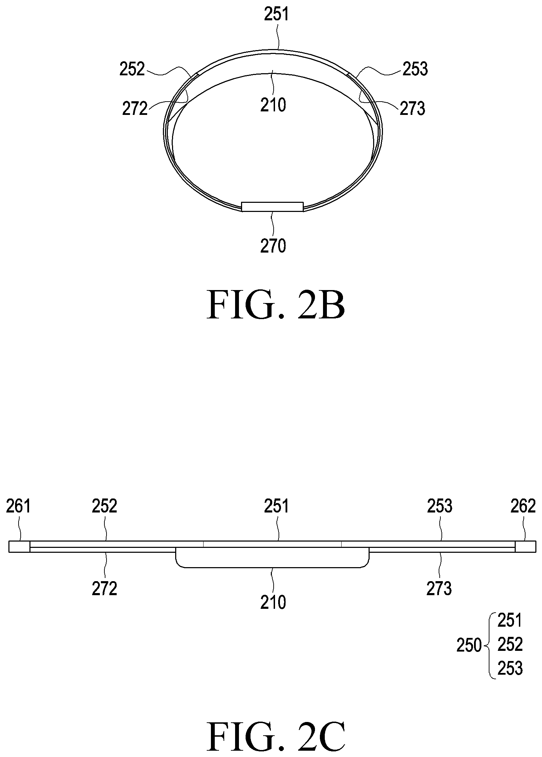

Referring to FIG. 2A, according to an embodiment, a wearable electronic device 201 (e.g., the electronic device 101) may include a body part 210 and a band part (e.g., a first band part 272 and a second band part 273 in FIG. 2B). For example, the wearable electronic device 201 may be implemented in a watch form or in a form wearable on a user's wrist.

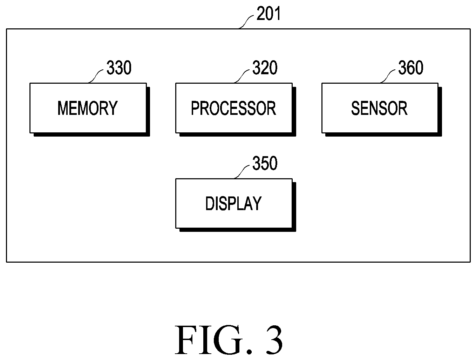

According to an embodiment, the body part 210 may include various components (e.g., the processor 320, the memory 330, and the sensor 360 in FIG. 3) for performing functions of the wearable electronic device 201.

According to an embodiment, the band part may correspond to a portion of a flexible display 250. For example, a portion of the flexible display 250 may be placed on the band part. For example, the band part may be implemented in a form capable of being worn on the wrist of the user. According to an embodiment, the band part may include at least a portion of the flexible display 250. Alternatively, at least a portion of the body portion 210 may be implemented as the flexible display 250.

According to an embodiment, the flexible display 250 may include a first display area 251, a second display area 252, and a third display area 253. For example, the first display area 251 may be a display area corresponding to the body part 210. For example, the first display area 251 may display content stored in the wearable electronic device 201. For example, the first display area 251 may display a watch face of the wearable electronic device 201. The second display area 252 and the third display area 253 may be display areas corresponding to the band part. For example, the second display area 252 may be a display area corresponding to a first band part (e.g., the first band portion 272 in FIG. 2B), and the third display area 253 may be a display area corresponding to a second band part (e.g., the second band portion 273 in FIG. 2B). For example, the second display area 252 and the third display area 253 may display content stored in the wearable electronic device 201. Depending on the implementation, the wearable electronic device 201 may display content stored in the wearable electronic device 201 across the first display area 251, the second display area 252, and the third display area 253.

According to an embodiment, the wearable electronic device 201 may further include a connection part (e.g., the connection part 270 in FIG. 2B) capable of connecting or separating the band part. The connection part 270 may connect a first part (e.g., a binding part) 261 of the second display area 252 and a second part (e.g., a binding part) 262 of the third display area 253. Alternatively, the connection part 270 may separate the first part (e.g., a binding part) 261 of the second display area 252 and the second part (e.g., a binding part) 262 of the third display area 253.

According to another embodiment, the wearable electronic device 201 may not include the connection part 270. For example, the first part (e.g., a binding part) 261 of the second display area 252 may be bound to the second part (e.g., a binding part) 262 of the third display area 253. For example, the first part 261 and the second 262 may be bound by a magnet.

Conventional wearable electronic devices were unable to display or provide much information because the display area was limited to the area for displaying a watch face. Accordingly, conventional wearable electronic devices had limitations in continuously displaying content arranged in a specified order that is larger than the display area.

The wearable electronic device 201 according to an embodiment may extend the display area to the band part via the flexible display 250 and display or provide more information. The wearable electronic device 201 may continuously display content arranged in a specified order via the extended display area. In addition, the wearable electronic device 201 according to an embodiment may provide various interactions by using the extended display area.

FIGS. 2B and 2C are drawings illustrating a first form and a second form of a flexible display included in a wearable electronic device according to an embodiment.

Referring to FIGS. 2B and 2C, according to an embodiment, the flexible display 250 may be changed into various forms. For example, as the form of the flexible display 250 changes, the form of the body part 210 may also change.

Referring to FIG. 2B, according to an embodiment, the flexible display 250 may be changed to a form (e.g., a cylindrical form) in which the second display area 252 placed on the first band part 272 is connected to the third display area 253 placed on the second band part 273. For example, the second display area 252 placed on the first band part 272 and the third display area 253 placed on the second band part 273 may be connected to each other by the connection part 270. For example, the first form of the flexible display 250 may correspond to the form of the flexible display 250 illustrated in FIG. 2B. For example, in FIG. 2B, the connection part 270 may be configured to connect the first band part 272 to the second band part 273. For example, the first band part 272 may be connected to the second band part 273 via the connection part 270.

Referring to FIG. 2C, according to an embodiment, the flexible display 250 may be changed in a form in which the second display area 252 and the third display area 253 are separated. For example, the second form of the flexible display 250 may indicate the form of the flexible display 250 illustrated in FIG. 2C. For example, the connection part 270 in FIG. 2C may be configured to separate the first band part 272 from the second band part 273. For example, the first band part 272 may be separated from the second band part 273 via the connection part 270.

Referring to FIG. 2B and FIG. 2C, according to an embodiment, the wearable electronic device 201 may identify whether the second display area 252 and the third display area 253 are connected, by using a sensor (e.g., the sensor 360 in FIG. 3). For example, the wearable electronic device 201 may identify whether the flexible display 250 is in the first form or the second form, based on whether the second display area 252 and the third display area 253 are connected.

According to an embodiment, the first state of the wearable electronic device 201 may be a state in which the first band part 272 is connected to the second band part 273 via the connection part 270. For example, the first state of the wearable electronic device 201 may be related to the first form of the flexible display 250.

According to an embodiment, the first state of the wearable electronic device 201 may be a state in which the first band part 272 is separated from the second band part 273 via the connection part 270. For example, the first state of the wearable electronic device 201 may be related to the second form of the flexible display 250. FIG. 3 is a block diagram illustrating components of a wearable electronic device according to an embodiment.

Referring to FIG. 3, according to an embodiment, the wearable electronic device 201 may include a processor 320, memory 330, a display 350, and a sensor 360.

According to an embodiment, the processor 320 may control the overall operation of the wearable electronic device 201. For example, the processor 320 may be implemented as at least one processor. For example, the processor 320 may be implemented in the same or similar manner as the processor 120 in FIG. 1.

According to an embodiment, the memory 330 may store information (or data) of the wearable electronic device 201. For example, the memory 330 may be implemented in the same or similar manner as the memory 130 in FIG. 1.

According to an embodiment, the memory 330 may store instructions, when executed by the processor, that cause the wearable electronic device to perform at least one operation (or at least one function).

According to an embodiment, the display 350 may include a flexible display (e.g., the flexible display 250 in FIG. 2A), a rollable display, or a slidable display.

According to an embodiment, the processor 320 may provide a user interface including multiple objects arranged (or placed) in a specified order. The multiple objects may include graphic user interface (GUI) components capable of being scrolled vertically or horizontally. The multiple objects may not overlap with each other. Alternatively, the multiple objects may partially overlap with each other. For example, the processor 320 may scroll multiple objects forward or backward in a specified order, based on a user input. The processor 320 may display the scrolled objects on the display 350 (e.g., the flexible display 250 in FIG. 2A). For example, the specified order may be determined by the user or automatically determined. According to an embodiment, the multiple objects may be implemented as GUI components (or a list of GUI components) (e.g., pages of a home screen, a list of icons corresponding to applications, or a menu that provides multiple functions). For example, the multiple objects may include a GUI component, content, a thumbnail, an icon, an object including an icon and text, one page of multiple pages, a portion of all pages, one screen among multiple screens, and/or a portion of a full screen.

According to an embodiment, the processor 320 may display a list of objects arranged in a sequential order on the display 350 (e.g., the flexible display 250). In response to a user input, the processor 320 may scroll the objects in the list displayed on the flexible display. For example, the user input may indicate an input for scrolling the objects. According to an embodiment, the multiple objects may include a first object (e.g., an object corresponding to the beginning or an object arranged in the first order among the objects in the list) corresponding to one end and a second object (e.g., an object corresponding to the end or an object arranged in the last order among the objects in the list) corresponding to another end. The multiple objects may further include at least one object between the first object and the second object.

According to an embodiment, the processor 320 may display, on the display 350, objects corresponding to some of the multiple objects arranged in a specified order. For example, the total size of the multiple objects may be larger than the size (or area) of the display 350. For example, the sum of the sizes of all the objects may be larger than the size (or area) of the flexible display 250. For example, the size of all objects arranged in the sequential order related to the list arranged in the sequential order may be larger than the size of the display area of the display 350 (e.g., the flexible display 250). For example, the display 350 (e.g., the flexible display 250) may display only some of all objects on the display area. Accordingly, only some of the objects corresponding to some of the multiple objects (or all objects arranged in a sequential order) may be displayed on the flexible display 350.

According to an embodiment, the processor 320 may identify at least one user input for scrolling objects displayed on the flexible display 250 in a first direction (e.g., one of the up, down, left, and right directions). For example, at least one user input may include a single input or multiple inputs. For example, at least one user input (or a user input for scrolling the objects) may include a touch and drag or a swipe input on the flexible display 250. In addition, at least one user input may include an input to the bezel (or bezel portion) of the wearable electronic device 201 or an input to an input module (e.g., a key, a button, or a crown) included in the wearable electronic device 201.

According to an embodiment, the processor 320 may identify whether scrolling to the previous portion of the first object or the next portion of the second object is requested by at least one user input. The processor 320 may identify whether the display 350 (e.g., the flexible display 250) is in the first form or the second form, based on identifying that scrolling to the previous portion of the first object or the next portion of the second object is requested. For example, the processor 320 may identify whether the display 350 is in the first form or the second form by using the sensor 360 (e.g., the sensor module 176 in FIG. 1). For example, the processor 320 may identify the form of the display 350 when it is identified that scrolling to the previous portion of the first object or the next portion of the second object is requested. Alternatively, the processor 320 may identify the form of the display 350 that has been sensed in advance using the sensor 360. For example, the sensor 360 may be configured to sense whether the second display area 252 and the third display area 253 are connected (or combined).

According to an embodiment, when the display 350 (e.g., the flexible display 250) is in the first form, the processor 320 may scroll multiple objects in a first direction without scroll stop (in a loop). The processor 320 may scroll multiple objects in the first direction to display the second object after the first object or to display the second object after the second object. For example, based on identifying that the first direction for scrolling multiple objects is in a reverse direction, the processor 320 may display the second object after the first object in the reverse direction. Alternatively, based on identifying that the first direction for scrolling multiple objects is in a forward direction, the processor 320 may display the first object after the second object in the forward direction. In this case, the processor 320 may output (e.g., display, vibration output, and/or sound output) information (e.g., vibration, sound, message, and/or image) indicating the end portion of the multiple objects.

According to an embodiment, when the display 350 (e.g., the flexible display 250) is in the second form, the processor 320 may stop scrolling of the multiple objects. In this case, the processor 320 may output information (e.g., vibration, sound, message, and/or image) indicating the end portion of the multiple objects. In addition, the processor 320 may output (e.g., display, vibration output, and/or sound output) information (e.g., vibration, sound, message, and/or image) indicating scroll stop and/or scroll disable.

According to an embodiment, when the wearable electronic device 201 is in the first state in which the first band part 272 is connected to the second band part 273 via the connection part 270, the processor 320 may scroll in a loop to display the beginning of the list following the end of the list, based on reaching the end of the list while scrolling the objects in the list arranged in a sequential order. For example, when the wearable electronic device 201 is in the first state and the direction of scrolling the objects in the list is a forward direction with respect to the order of the list, the first object corresponding to the beginning of the list may be displayed after the second object corresponding to the end of the list based on reaching the end of the list while scrolling the objects. Alternatively, when the wearable electronic device 201 is in the first state and the direction of scrolling the objects in the list is a reverse direction with respect to the order of the list, the second object corresponding to the end of the list may be displayed after the first object corresponding to the beginning of the list based on reaching the end of the list while scrolling the objects.

According to an embodiment, when the wearable electronic device 201 is in the first state in which the first band part 272 is separated from the second band part 273 via the connection part 270, the processor 320 may stop scrolling the objects based on reaching the end of the list while scrolling the objects in the list arranged in a sequential order.

According to an embodiment, the processor 320 may display information indicating the end of the list on the display 350 (e.g., the flexible display 250), based on reaching the end of the list.

According to an embodiment, the processor 320 may reduce (e.g., reduce the size of the objects according to scrolling) the size of objects close to the connection part 270 while scrolling objects based on identifying that the wearable electronic device 201 is in the first state.

According to an embodiment, the processor 320 may identify a third object close to the connection part 270 while scrolling objects and display at least one image representing at least one object corresponding to the next sequence of the third object. In this case, at least one image may be displayed on a display area corresponding to one end of the second display area 252 and/or one end of the third display area 253. In addition, the processor 320 may place at least one image representing the at least one object corresponding to the next sequence of the third object, based on the order of the at least one object.

Hereinafter, at least some of the operations of the wearable electronic device 201 to be described may be performed or controlled by the processor 320. However, for convenience of description, the subject of the operations will be described as the wearable electronic device 201.

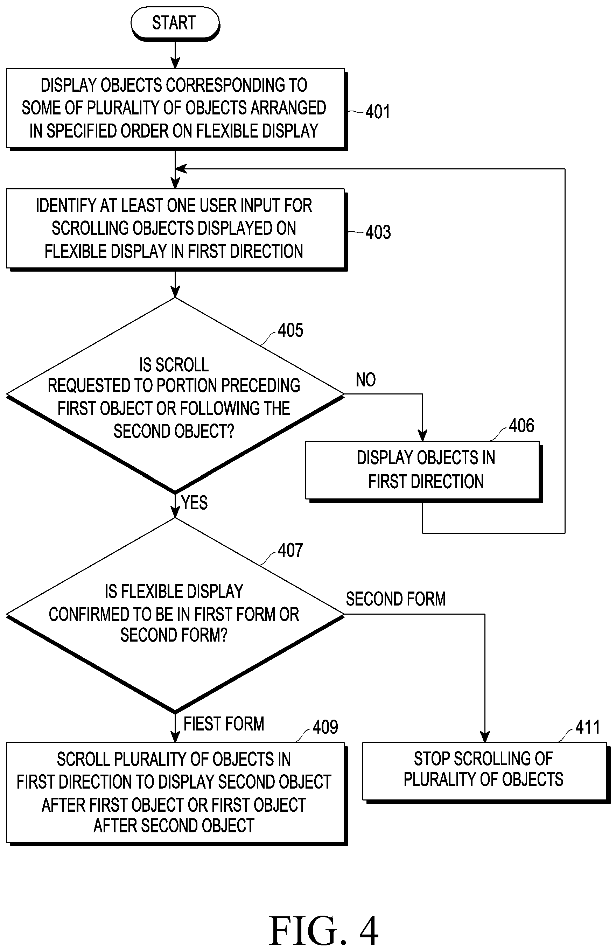

FIG. 4 is a flowchart illustrating a method for a wearable electronic device to scroll multiple objects by according to an embodiment.

Referring to FIG. 4, according to one embodiment, in operation 401, a wearable electronic device (e.g., the wearable electronic device 201 in FIG. 3) may display some of multiple objects arranged in a specified order on a flexible display (e.g., the flexible display 250 in FIG. 2A). For example, the wearable electronic device 201 may display a list of objects arranged in a sequential order via the flexible display 250.

According to an embodiment, in operation 403, the wearable electronic device 201 may identify at least one user input for scrolling the objects displayed on the flexible display 250 in a first direction (e.g., one of the up, down, left, and right directions). For example, the wearable electronic device 201 may scroll the objects in the list arranged in a sequential order displayed on the flexible display 250 in response to at least one user input.

According to an embodiment, in operation 405, the wearable electronic device 201 may identify whether scrolling to the previous portion of the first object (e.g., an object in the first order in the specified order) corresponding to one end of the multiple objects or the next portion of the second object (e.g., an object in the last order in the specified order) corresponding to another end of the multiple objects is requested. For example, the wearable electronic device 201 may identify whether the end of the list has been reached while scrolling the objects.

According to an embodiment, if the scrolling to the previous portion of the first object or the next portion of the second object (or the end of the list is not reached while scrolling the objects) is not requested (No in operation 405), in operation 406, the wearable electronic device 201 may display the scrolled objects on the flexible display 250 in the first direction. For example, the wearable electronic device 201 may display the scrolled objects.

According to an embodiment, when scrolling to the previous portion of the first object or the next portion of the second object of the multiple objects (or when the end of the list is reached while scrolling the objects) is requested (Yes in operation 405), in operation 407, the wearable electronic device 201 may identify whether the flexible display 250 is in the first form or the second form. Alternatively, the wearable electronic device 201 may identify whether the wearable electronic device 201 is in the first state or the second state. For example, the wearable electronic device 201 may identify whether the display 350 is in the first form or the second form by using the sensor 360. For example, when it is identified that scrolling is requested to the previous portion of the first object or the next portion of the second object, the wearable electronic device 201 may identify the form of the display 350 by using the sensor 360. Alternatively, when it is identified that scrolling to the previous portion of the first object or the next portion of the second object is requested, the wearable electronic device 201 may determine the form of the display 350 by using the sensor 360.

According to an embodiment, when the form of the flexible display 250 is identified as the first form, in operation 409, the wearable electronic device 201 may scroll the multiple objects in the first direction to display the second object after the first object or to display the first object after the second object. That is, the wearable electronic device 201 may scroll the multiple objects in a first direction without scroll stop. For example, when the wearable electronic device 201 is in the first state, the wearable electronic device 201 may scroll in a loop to display the beginning of the list (or the first object corresponding to the beginning) following the end of the list (or the second object corresponding to the end), based on reaching the end of the list while scrolling the objects. When displaying the second object after the first object or displaying the first object after the second object, the wearable electronic device 201 may output information (e.g., vibration, sound, message, and/or image) indicating that it is the end (or last) of the multiple objects. According to an embodiment, when the form of the flexible display 250 is identified as the second form, in operation 411, the wearable electronic device 201 may stop scrolling of the multiple objects. For example, when the wearable electronic device 201 is in the second state, the wearable electronic device 201 may stop scrolling of the objects, based on reaching the end of the list while scrolling the objects. The wearable electronic device 201 may output information (e.g., vibration, sound, message, and/or image) indicating that it is the end (or last) of the multiple objects. In addition, the wearable electronic device 201 may output (e.g., display, vibration output, and/or sound output) information (e.g., vibration, sound, message, and/or image) indicating scroll stop and/or scroll disable.

Based on the method described above, the wearable electronic device 201 may configure a method for scrolling the multiple objects arranged in a specified order differently, based on the form of the flexible display 250. Accordingly, the wearable electronic device 201 may effectively scroll and display the multiple objects arranged in a continuous order while the user is wearing the wearable electronic device 201.

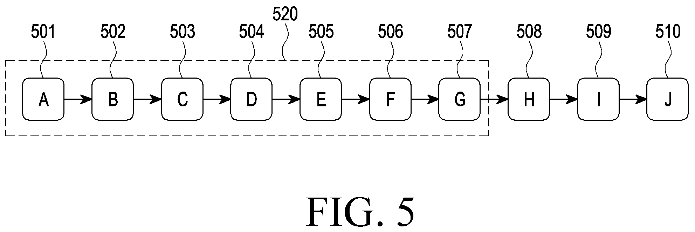

FIG. 5 is a drawing illustrating multiple objects arranged in a specified order according to an embodiment.

Referring to FIG. 5, according to an embodiment, the multiple objects (e.g., 501 to 510) may be arranged based on a specified order. For example, the multiple objects (e.g., 501 to 510) may represent a list of objects arranged in a sequential order.

According to an embodiment, the multiple objects (e.g., 501 to 510) may be implemented as GUI components (or a list of GUI components) (e.g., pages of a home screen, a list of icons corresponding to an application, or a menu providing multiple functions). For example, the multiple objects may include GUI components, content, thumbnails, icons, objects including icons and text, one page among multiple pages, a portion of an entire page, one screen among multiple screens, and/or a portion of an entire screen.

According to an embodiment, the multiple objects 501 to 510 may include the first object 501 corresponding to one end and the second object 510 corresponding to another end. For example, the first object 501 may be the first object in order among the multiple objects 501 to 510. The second object 510 may be the last object in order among the multiple objects 501 to 510. The multiple objects 501 to 510 may include at least one object (e.g., 502, 503, 504, 505, 506, 507, 508, or 509) between the first object and the second object.

Meanwhile, although FIG. 5 illustrates ten objects arranged horizontally, this is merely exemplary and the technical spirit of the disclosure is not limited thereto. For example, the types, arranged forms, and/or numbers of the multiple objects may not be limited thereto. For example, although FIG. 5 illustrates a plurality of objects arranged in a single line, this is merely exemplary and the technical spirit of the disclosure is not limited thereto. For example, multiple objects including the multiple lines arranged in a specified order may also be applied to the disclosure.

According to an embodiment, the wearable electronic device 201 may display objects 520 corresponding to some of the multiple objects 501 to 510 on a flexible display (e.g., the flexible display 250 in FIG. 2A). For example, the total size of the multiple objects 501 to 510 may be larger than the size (or area) of the flexible display 250. The wearable electronic device 201 may scroll the multiple objects 501 to 510, based on a user input, and display at least one of the objects 508, 509, and 510, which were not displayed, on the flexible display 250.

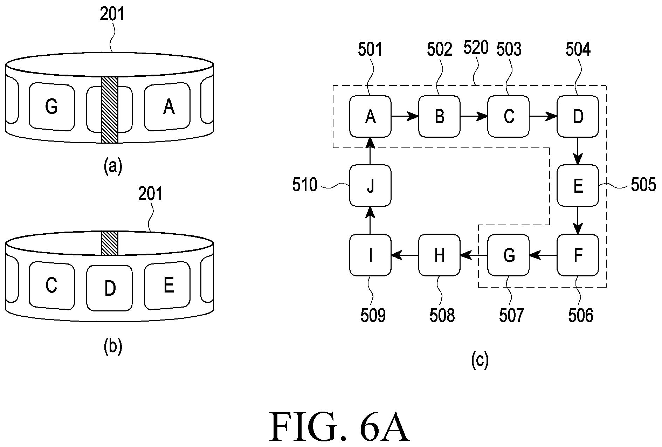

FIG. 6A is a drawing illustrating a method for a wearable electronic device to display some of multiple objects when a flexible display is in a first form, according to an embodiment.

Referring to FIG. 6A, when the flexible display 250 is in the first form, the wearable electronic device 201 may display the objects 520 corresponding to some of the multiple objects 501 to 510.

According to an embodiment, (a) and (b) in FIG. 6A may represent objects displayed on the wearable electronic device 201. According to an embodiment, (c) in FIG. 6A may represent the objects 520 displayed by the flexible display (e.g., the flexible display 250 in FIG. 2A) among the multiple objects 501 to 510.

According to an embodiment, when the flexible display 250 is in the first form, the wearable electronic device 201 may scroll the multiple objects 501 to 510 without scroll stop. For example, when the wearable electronic device 201 is in the first state, the wearable electronic device 201 may scroll multiple objects 501 to 510 in a loop such that the first (e.g., the first object 501) of the list (e.g., a list including the multiple objects 501 to 510) is displayed after the last (e.g., the second object 510) of the list. For example, the wearable electronic device 201 may display the first object 501 after the second object 510.

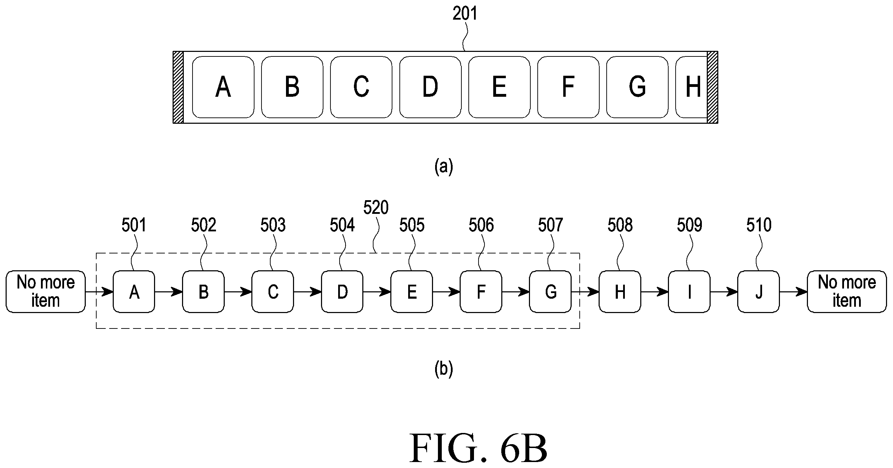

FIG. 6B is a drawing illustrating a method for a wearable electronic device to display some of multiple objects when a flexible display is in a second form, according to an embodiment.

Referring to FIG. 6B, when the flexible display 250 is in the second form, the wearable electronic device 201 may display the objects 520 corresponding to some of the multiple objects 501 to 510.

According to an embodiment, (a) in FIG. 6B may represent objects displayed on the wearable electronic device 201. According to an embodiment, (b) in FIG. 6A may represent the objects 520 displayed by the flexible display (e.g., the flexible display 250 in FIG. 2A) among the multiple objects 501 to 510.

According to an embodiment, when the flexible display 250 is in the second form, the wearable electronic device 201 may stop scrolling when it reaches the second object 510 while scrolling the multiple objects 510 to 510. For example, when the wearable electronic device 201 is in the first state, the wearable electronic device 201 may stop scrolling the multiple objects 501 to 510, based on reaching the end of the list (e.g., a list including the multiple objects 501 to 510). For example, the wearable electronic device 201 may not display the first object 501 after the second object 510. Depending on the implementation, the wearable electronic device 201 may display information (e.g., a message (e.g., "No more item")) indicating that the second object 510 is the last object among the multiple objects 501 to 510 after the second object 510.

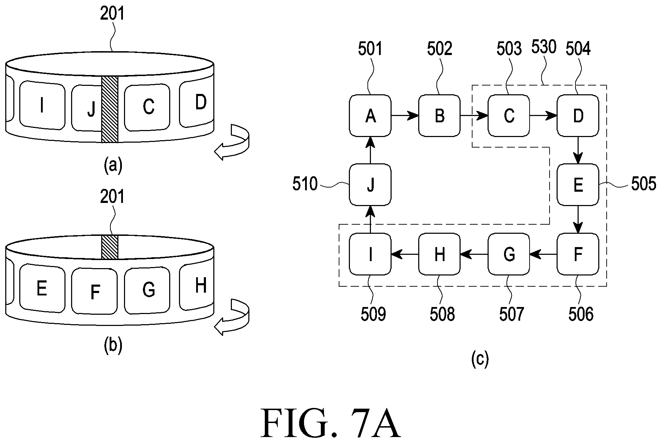

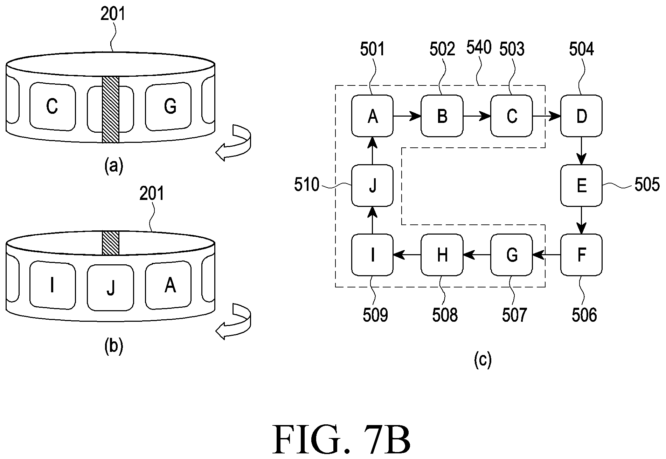

FIGS. 7A and 7B are drawings illustrating a method for a wearable electronic device to scroll multiple objects when a flexible display is in a first form, according to an embodiment.

Referring to FIGS. 7A and 7B, according to an embodiment, (a) and (b) of FIG. 7A may indicate objects displayed on the wearable electronic device 201. According to an embodiment, (c) in FIG. 7A may indicate objects 530 displayed by a flexible display (e.g., the flexible display 250 in FIG. 2A) among a plurality of objects 501 to 510.

According to an embodiment, the wearable electronic device 201 may identify whether scrolling to a previous portion of the first object 501 or a next portion of the second object 510 is requested for the objects displayed on the flexible display 250.

Referring to FIG. 7A, according to an embodiment, when it is identified that scrolling to a previous portion of the first object 501 or a next portion of the second object 510 is not requested for the objects displayed on the flexible display 250, the wearable electronic device 201 may display the scrolled objects 530 on the flexible display 250.

Referring to FIG. 7B, according to an embodiment, when it is identified that scrolling to a previous portion of the first object 501 or a next portion of the second object 510 is requested for the objects displayed on the flexible display 250, the wearable electronic device 201 may scroll the multiple objects 501 to 510 without scroll stop when the flexible display 250 is in the first form. For example, when the wearable electronic device 201 is in the first state, the wearable electronic device 201 may scroll multiple objects 501 to 510 in a loop such that the first (e.g., the first object 501) of the list (e.g., a list including the multiple objects 501 to 510) is displayed after the last (e.g., the second object 510) of the list. The wearable electronic device 201 may display the scrolled objects 540 on the flexible display 250. For example, the wearable electronic device 201 may display the first object 501 after the second object 510.

Based on the method described above, when the flexible display 250 is in the first form, the wearable electronic device 201 may scroll multiple objects, such as in a loop form, in response to a user request.

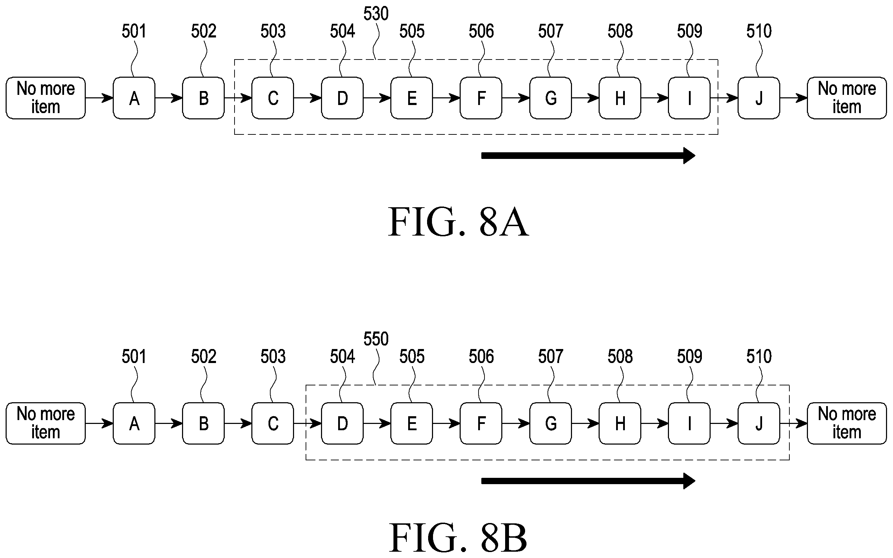

FIGS. 8A and 8B are drawings illustrating a method for a wearable electronic device to scroll multiple objects when a flexible display is in a second form, according to an embodiment.

Referring to FIGS. 8A and 8B, according to an embodiment, the wearable electronic device 201 may identify whether scrolling to a previous portion of the first object 501 or a next portion of the second object 510 is requested for the objects displayed on the flexible display 250.

Referring to FIG. 8A, according to an embodiment, when it is identified that scrolling to a previous portion of the first object 501 or a next portion of the second object 510 (or when it is identified that the end of the list (e.g., the plurality of objects 501 to 510) is not reached) is not requested for the objects displayed on the flexible display 250, the wearable electronic device 201 may display the scrolled objects 530 on the flexible display 250. For example, the wearable electronic device 201 may display the third object 503 (e.g., object C) at an end portion of the second display area 252 and display the ninth object 509 (e.g., object I) at an end portion of the third display area 253.

Referring to FIG. 8B, according to an embodiment, when it is identified that scrolling to a previous portion of the first object 501 or a next portion of the second object 510 (or when it is identified that the end of the list (e.g., the plurality of objects 501 to 510) is reached) is requested for the objects displayed on the flexible display 250, the wearable electronic device 201 may stop scrolling when the flexible display 250 is in the second form. For example, the wearable electronic device 201 may display the scrolled objects 550 on the flexible display 250. For example, the wearable electronic device 201 may display the fourth object 504 (e.g., object D) at the end portion of the second display area 252 and the tenth object 510 (e.g., object J) at the end portion of the third display area 253. For example, the wearable electronic device 201 may not display the first object 501 after the second object 510.

Based on the method described above, when the flexible display 250 is in the second form, the wearable electronic device 201 may scroll multiple objects only up to the specified area.

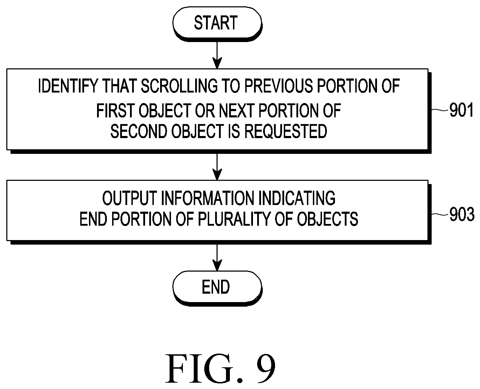

FIG. 9 is a flowchart illustrating a method for a wearable electronic device to output information indicating a point corresponding to an end of multiple objects, according to an embodiment.

Referring to FIG. 9, according to an embodiment, in operation 901, a wearable electronic device (e.g., the wearable electronic device 201 in FIG. 3) may identify that scrolling to a previous portion of a first object or a next portion of a second object is requested. For example, the first object may be an object (e.g., an object in the first order in the specified order) corresponding to one end of the multiple objects arranged in a specified order. The second object may be an object (e.g., an object in the last order in the specified order) corresponding to another end of the multiple objects arranged in a specified order.

According to an embodiment, when it is identified that scrolling to a previous portion of a first object or a next portion of a second object is requested, in operation 903, the wearable electronic device 201 may output information indicating the end portion of the multiple objects. For example, the wearable electronic device 201 may output information indicating that the end portions of the multiple objects without considering the form of the flexible display. For example, the wearable electronic device 201 may provide feedback through vibration and/or sound at the time of identifying that scrolling to a previous portion of the first object or a next portion of the second object is requested. When it is identified that scrolling to a previous portion of a first object or a next portion of a second object is requested, the wearable electronic device 201 may display a message and/or an image indicating that the previous portion of the first object or the next portion of the second object is the end of the multiple objects.

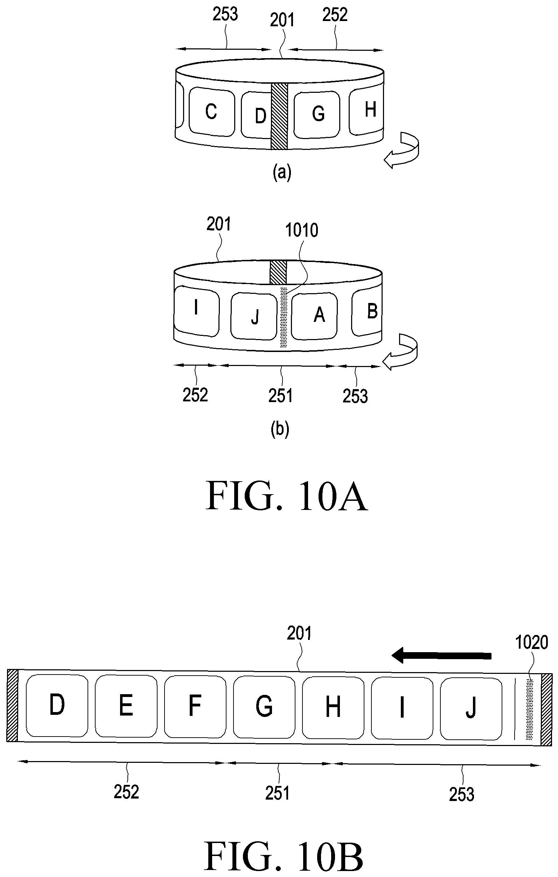

FIGS. 10A and 10B are drawings illustrating a method for a wearable electronic device to output information indicating a point corresponding to an end of multiple objects, according to an embodiment.

Referring to FIG. 10A, according to one embodiment, when the flexible display 250 is in the first form, the wearable electronic device 201 may provide feedback through vibration and/or sound when scrolling to the previous portion of the first object or the next portion of the second object is requested. For example, when scrolling to the previous portion of the first object (e.g., object A) is requested, the wearable electronic device 201 may provide feedback through vibration and/or sound at a time point 1010 at which the second object (e.g., object J) is displayed after the first object (e.g., object A).

Referring to FIG. 10B, according to one embodiment, when the flexible display 250 is in the second form, the wearable electronic device 201 may provide feedback through vibration and/or sound when scrolling to the previous portion of the first object or the next portion of the second object is requested. For example, when scrolling to the next portion of the second object (e.g., object J) is requested, the wearable electronic device 201 may provide feedback through vibration and/or sound at a time point 1020 at which the scroll operation is stopped.

Through the method described above, the wearable electronic device 201 may notify the user that the scroll has reached the end points of multiple objects. Through this, the wearable electronic device 201 may effectively notify the user of the points of the objects currently being scrolled. In addition, when the flexible display 250 is in the second form, the wearable electronic device 201 may effectively notify the user of a point where scrolling is not possible.

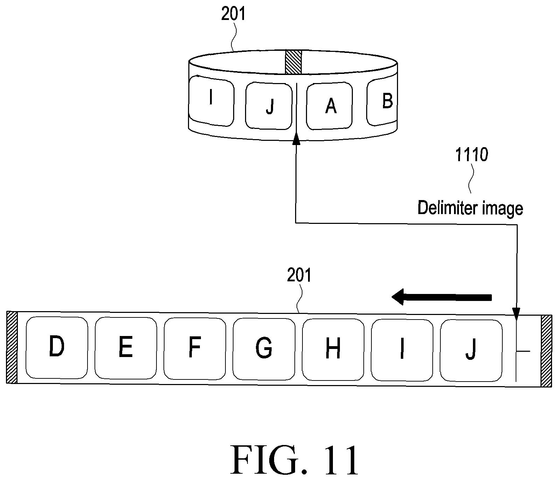

FIG. 11 is a drawing illustrating a method for a wearable electronic device to display information indicating a point corresponding to an end of multiple objects, according to an embodiment.

Referring to FIG. 11, according to an embodiment, when it is identified that scrolling to a previous portion of a first object or a next portion of a second object is requested, the wearable electronic device 201 may display information 1110 (e.g., a delimiter image) indicating a point corresponding to the end of multiple objects. For example, the point corresponding to the end of the multiple objects may be a display area of the flexible display (e.g., 250 in FIG. 2A) corresponding to a previous portion of the first object or a next portion of the second object.

According to an embodiment, the wearable electronic device 201 may display a delimiter image 1120 indicating the end portions of multiple objects at the corresponding point. For example, the delimiter image 1120 may include text or a message indicating that there is no further object. For example, the delimiter image 1120 may include an image (e.g., a boundary line) indicating the start or end of a plurality of objects.

Through the method described above, the wearable electronic device 201 may notify the user that the scroll has reached the end points of multiple objects. Through this, the user may effectively identify the points of the objects currently being scrolled.

Meanwhile, the shape and form of the delimiter image 1120 shown in FIG. 11 are exemplary, and the technical spirit of the disclosure is not limited thereto.

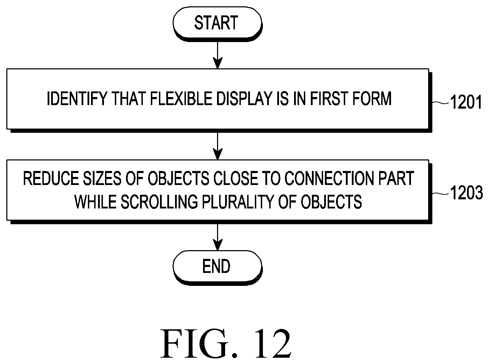

FIG. 12 is a flowchart illustrating a method for a wearable electronic device to reduce the size of an object close to a connection part among multiple objects, according to an embodiment.

Referring to FIG. 12, according to an embodiment, in operation 1201, a wearable electronic device (e.g., the wearable electronic device 201 in FIG. 3) may identify that a flexible display (e.g., the flexible display 250 in FIG. 2A) is in a first form.

According to an embodiment, in operation 1203, the wearable electronic device 201 may reduce the sizes of objects close to a connection part (e.g., the connection part 270 in FIG. 2B) while scrolling multiple objects. For example, the wearable electronic device 201 may reduce the size of a specified number of objects close to the connection part 270. The wearable electronic device 201 may reduce the sizes of the corresponding objects differently based on the proximity information of the connection part 270. For example, the wearable electronic device 201 may display the object closest to the connection part 270 as the smallest. In addition, the wearable electronic device 201 may display an object that is less close to the connection part 270 than the smallest displayed object relatively larger than the smallest displayed object.

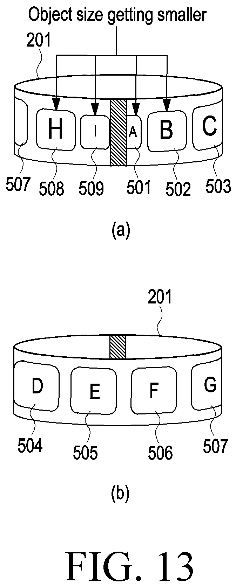

FIG. 13 is a drawing illustrating a method for a wearable electronic device to reduce the size of an object close to a connection part among multiple objects, according to an embodiment.

Referring to FIG. 13, when a flexible display (e.g., the flexible display 250 in FIG. 2A) is in the first form, the wearable electronic device 201 may reduce the size of objects close to a connection part (e.g., the connection part 270 in FIG. 2B) while scrolling multiple objects.

According to an embodiment, the wearable electronic device 201 may display the first object 501 (or the ninth object 509) closest to the connection part in a smaller size than other objects (e.g., 503, 504, 505, 506, 507). In addition, the wearable electronic device 201 may also display the second object 502 (or the eighth object 508) next closest to the connection part in a smaller size than other objects (e.g., 503, 504, 505, 506, 507). In this case, the second object 502 (or the eighth object 508) may be displayed relatively larger than the first object 501 (or the ninth object 509).

According to the method described above, the wearable electronic device 201 may notify the user that the scroll has reached close to the end points of multiple objects. Through this, the user may effectively identify the points of the objects currently being scrolled.

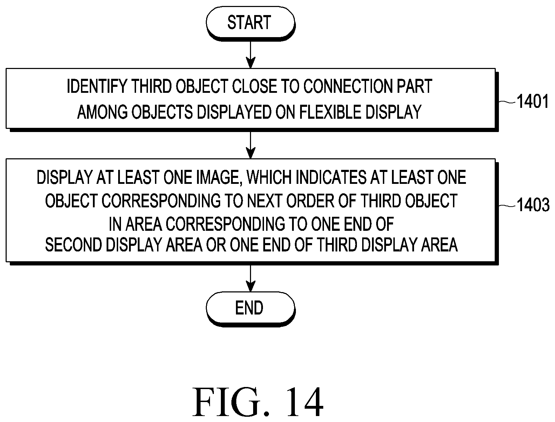

FIG. 14 is a flowchart illustrating a method for a wearable electronic device to display at least one image representing at least one object corresponding to the next sequence of a third object close to a connection part among multiple objects.

Referring to FIG. 14, according to an embodiment, in operation 1401, a wearable electronic device (e.g., the wearable electronic device 201 in FIG. 3) may identify a third object close to a connection part among objects displayed on a flexible display (e.g., the flexible display 250 in FIG. 2A). For example, the third object may be displayed at an end point of the second display area 252 or the third display area 253.

According to an embodiment, in operation 1403, the wearable electronic device 201 may display at least one image, which indicates at least one object corresponding to a next order (or a previous order) of the third object not displayed on the flexible display 250, in an area (or display area) corresponding to one end of the second display area 252 or one end of the third display area 253. For example, the at least one image indicating at least one object may include an icon or text indicating the corresponding object. For example, the at least one image indicating at least one object may be smaller in size than the corresponding object.

According to an embodiment, the wearable electronic device 201 may place the least one image indicating at least one object based on the order of the at least one object. For example, when there are multiple objects in the order following the third object, the wearable electronic device 201 may place the object with a relatively earlier order among the multiple objects above other objects. However, this is merely exemplary, and the placement positions may be determined differently depending on the order.

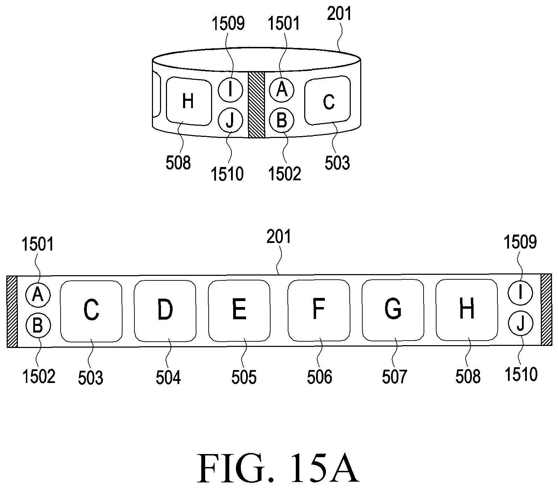

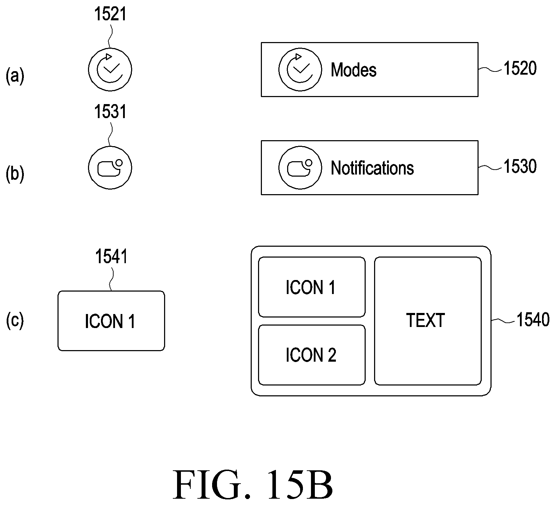

FIGS. 15A and 15B are drawings illustrating a method for a wearable electronic device to display at least one image representing at least one object corresponding to the next sequence of a third object close to a connection part among multiple objects.

Referring to FIG. 15A, the wearable electronic device 201 (e.g., the wearable electronic device 201 in FIG. 3) may display images 1501 and 1502 indicating previous objects 501 and 502 of the third object 503 close to a connection part on an area corresponding to one end of the second display area 252. For example, the corresponding images 1501 and 1502 may be displayed smaller in size than the third object 503. In addition, the corresponding images 1501 and 1502 may include a representative image (e.g., an icon) or representative text (e.g., a description of the corresponding object) that represents the corresponding objects 501 and 502. For example, the wearable electronic device 201 may place the first image 1501 indicating the first object having the higher specified order on top, and place the second image 1502 indicating the second object 502 having the lower specified order than the first object 501 under the first image 1501.

Similarly, the wearable electronic device 201 may display images 1509 and 1510 indicating the next objects 509 and 510 of the eighth object 508 close to the connection part in an area corresponding to one end of the third display area 253. For example, the wearable electronic device 201 may place the first image 1501 indicating the ninth image 1509 indicating the ninth object having the higher specified order on top, and place the tenth image 1510 indicating the tenth object 1510 having the lower specified order than the ninth image 1509 under the ninth image 1509.

According to an embodiment, when the flexible display 250 is in the first form, the wearable electronic device 201 may display images 1501, 1502, 1509, and 1510 close to a connection part.

According to an embodiment, when the flexible display 250 is in the second form, the wearable electronic device 201 may display images 1501 and 1502 corresponding to an area corresponding to one end of the second display area 252, and display images 1509 and 1510 corresponding to an area corresponding to one end of the third display area 253.

Referring to FIG. 15B, according to an embodiment, the wearable electronic device 201 may determine an image indicating the corresponding object. For example, referring to (a) of FIG. 15B, the wearable electronic device 201 may determine an icon 1521 (e.g., a representative icon) with respect to an object 1520 including an icon and text as an image representing the object 1520. Referring to (a) of FIG. 15B, the wearable electronic device 201 may determine an icon 1531 (e.g., a representative icon) with respect to an object 1530 including an icon and text as an image representing the object 1530. For example, referring to (c) of FIG. 15B, the wearable electronic device 201 may determine, for an object 1540 including multiple icons and text, a prespecified icon 1541 (e.g., a representative icon) among the icons as an image representing the object 1540.

According to an embodiment, the wearable electronic device 201 may include a connection part 270, a sensor 360, a flexible display 250 or 350, a processor 320, and memory 330 including instructions. According to an embodiment, the flexible display may include a first display area 251 corresponding to the body part 210 of the wearable electronic device, a second display area 252 corresponding to the band part of the wearable electronic device, and a third display area 253, and one end of the second display area and one end of the third display may be connected to or separated from each other by the connection part. According to an embodiment, the instructions, when executed by the processor, may cause the wearable electronic device to display some of multiple objects arranged in a specified order on the flexible display. According to an embodiment, the multiple objects may include a first object located at one end of the multiple objects and a second object located at another end. According to an embodiment, the instructions, when executed by the processor, may cause the wearable electronic device to identify at least one user input to scroll the objects displayed on the flexible display in a first direction. According to an embodiment, the instructions, when executed by the processor, may cause the wearable electronic device to identify whether scrolling to a previous portion of the first object or a next portion of the second object is requested by the at least one user input. According to an embodiment, the instructions, when executed by the processor, may cause the wearable electronic device to identify whether the form of the flexible display is a first form in which the second display area and the third display area are connected, or a second form in which the second display area and the third display area are separated, based on the identifying that scrolling to the previous portion of the first object or the next portion of the second object is requested. According to an embodiment, the instructions, when executed by the processor, may cause the wearable electronic device to scroll the multiple objects in the first direction based on the identifying that the flexible display is in the first form, so as to display the second object after the first object or the first object after the second object. According to an embodiment, the instructions, when executed by the processor, may cause the wearable electronic device to stop scrolling the multiple objects based on the identifying that the flexible display is in the second form.

According to an embodiment, the size of the multiple objects may be larger than the size of the flexible display.

According to an embodiment, the instructions, when executed by the processor, may cause the wearable electronic device to display the first object after the second object based on identifying that the first direction is in a forward direction. According to an embodiment, the instructions, when executed by the processor, may cause the wearable electronic device to display the second object after the first object based on identifying that the first direction is in a reverse direction.

According to an embodiment, the instructions, when executed by the processor, may cause the wearable electronic device to display information indicating the end portion of the multiple objects on the flexible display, based on the identifying that scrolling to the previous portion of the first object or the next portion of the second object is requested.

According to an embodiment, the instructions, when executed by the processor, may cause the wearable electronic device to reduce the size of objects close to the connection part based on identifying that the flexible display is in the first form.

According to an embodiment, the instructions, when executed by the processor, may cause the wearable electronic device to identify a third object close to the connection part among the objects displayed on the flexible display. According to an embodiment, the instructions, when executed by the processor, may cause the wearable electronic device to display at least one image representing at least one object corresponding to a next sequence of the third object in a display area corresponding to the one end of the second display area or the one end of the third display area.

According to an embodiment, the instructions, when executed by the processor, may cause the wearable electronic device to place at least one image representing the at least one object based on the order of the at least one object.

According to an embodiment, the at least one image may include an icon or text related to the at least one object.

According to an embodiment, the instructions, when executed by the processor, may cause the wearable electronic device to display the at least one image in a size smaller than the third object.

According to an embodiment, the at least one user input may include a touch and drag or swipe on the flexible display, an input on the bezel of the wearable electronic device, or an input on the crown of the wearable electronic device.

According to an embodiment, in an operation method performed by a wearable electronic device 201 including a flexible display 250 or 350, the flexible display may include a first display area 251 corresponding to the body part 210 of the wearable electronic device, a second display area 252 corresponding to the band part of the wearable electronic device, and a third display area 253, and one end of the second display area and one end of the third display may be connected to or separated from each other by the connection part 270. The operation method performed by a wearable electronic device according to an embodiment may include an operation of displaying some of multiple objects arranged in a specified order on the flexible display. According to an embodiment, the multiple objects may include a first object located at one end of the multiple objects and a second object located at another end. The operation method performed by a wearable electronic device according to an embodiment may include an operation of identifying at least one user input to scroll the objects displayed on the flexible display in a first direction. The operation method performed by a wearable electronic device according to an embodiment may include an operation of identifying whether scrolling to a previous portion of the first object or a next portion of the second object is requested by the at least one user input. The operation method performed by a wearable electronic device according to an embodiment may include an operation of identifying whether the form of the flexible display is a first form in which the second display area and the third display area are connected, or a second form in which the second display area and the third display area are separated, based on the identifying that scrolling to the previous portion of the first object or the next portion of the second object is requested. The operation method performed by a wearable electronic device according to an embodiment may include an operation of scrolling the multiple objects in the first direction based on the identifying that the flexible display is in the first form, so as to display the second object after the first object or the first object after the second object. The operation method performed by a wearable electronic device according to an embodiment may include an operation of stopping scrolling the multiple objects based on the identifying that the flexible display is in the second form.

According to an embodiment, the size of the multiple objects may be larger than the size of the flexible display.

The operation method performed by the wearable electronic device according to an embodiment may further include an operation of displaying the first object after the second object based on identifying that the first direction is in a forward direction. The operation method performed by the wearable electronic device according to an embodiment may further include an operation of displaying the second object after the first object based on identifying that the first direction is in a reverse direction.

The operation method performed by the wearable electronic device according to an embodiment may further include an operation of displaying information indicating the end portion of the multiple objects on the flexible display, based on the identifying that scrolling to the previous portion of the first object or the next portion of the second object is requested.

The operation method performed by the wearable electronic device according to an embodiment may further include an operation of reducing the size of objects close to the connection part based on identifying that the flexible display is in the first form.

The operation method performed by the wearable electronic device according to an embodiment may further include an operation of identifying a third object close to the connection part among the objects displayed on the flexible display. The operation method performed by the wearable electronic device according to an embodiment may further include an operation of displaying at least one image representing at least one object corresponding to a next sequence of the third object in a display area corresponding to the one end of the second display area or the one end of the third display area.

The operation method performed by the wearable electronic device according to an embodiment may further include an operation of placing at least one image representing the at least one object based on the order of the at least one object.

According to an embodiment, the at least one image may include an icon or text related to the at least one object.

The operation method performed by the wearable electronic device according to an embodiment may further include an operation of displaying the at least one image in a size smaller than the third object.

According to an embodiment, a computer-readable non-temporary recording medium 130 or 330 may store instructions that may perform an operation of displaying some of multiple objects arranged in a specified order on the flexible display 250 or 350, wherein the flexible display may include a first display area 251 corresponding to the body part 210 of the wearable electronic device, a second display area 252 corresponding to the band part of the wearable electronic device, and a third display area 253, and one end of the second display area and one end of the third display may be connected to or separated from each other by the connection part 270, and wherein the multiple objects may include a first object corresponding to one end of the multiple objects and a second object corresponding to another end, an operation of identifying at least one user input to scroll the objects displayed on the flexible display in a first direction, identifying whether scrolling to a previous portion of the first object or a next portion of the second object is requested by the at least one user input, identifying whether the form of the flexible display is a first form in which the second display area and the third display area are connected, or a second form in which the second display area and the third display area are separated, based on the identifying that scrolling to the previous portion of the first object or the next portion of the second object is requested, scrolling the multiple objects in the first direction based on the identifying that the flexible display is in the first form, so as to display the second object after the first object or the first object after the second object, and stopping scrolling the multiple objects based on the identifying that the flexible display is in the second form.

According to an embodiment, a wearable electronic device may include a body part, a first band part, a second band part, a connection part configured to connect the first band part to the second band part, a flexible display, a processor, and memory storing instructions. According to an embodiment, the flexible display may include a first display area corresponding to the body part, a second display area corresponding to the first band part, and a third display area corresponding to the second band part. According to an embodiment, the instructions, when executed by the processor, may cause the wearable electronic device to display, via the flexible display, a list of objects arranged in a sequential order. According to an embodiment, the instructions, when executed by the processor, may cause the wearable electronic device to scroll the objects in the list displayed on the flexible display, in response to a user input. According to an embodiment, the instructions, when executed by the processor, may cause the wearable electronic device to scroll in a loop to indicate the beginning of the list following the end of the list, based on reaching the end of the list while scrolling the objects when the wearable electronic device is in a first state in which the first band is connected to the second band via the connection part. According to an embodiment, the instructions, when executed by the processor, may cause the wearable electronic device to stop scrolling the objects based on reaching the end of the list while scrolling the objects when the wearable electronic device is in a second state in which the first band is separated from the second band via the connection part.

According to an embodiment, a total size of all objects arranged in the sequential order related to the list may be larger than the size of the display area of the flexible display.

According to an embodiment, the instructions, when executed by the processor, may cause the wearable electronic device to display a first object corresponding to the beginning after a second object corresponding to the end, based on reaching the end of the list while scrolling the objects, when the wearable electronic device is in the first state and the direction of scrolling the objects is a forward direction with respect to the order of the list. According to an embodiment, the instructions, when executed by the processor, may cause the wearable electronic device to display a second object corresponding to the end after a first object corresponding to the beginning, based on reaching the end of the list while scrolling the objects, when the wearable electronic device is in the first state and the direction of scrolling the objects is a reverse direction with respect to the order of the list.

According to an embodiment, the instructions, when executed by the processor, may cause the wearable electronic device to display information indicating the end of the list on the flexible display based on reaching the end of the list while scrolling the objects.

According to an embodiment, the instructions, when executed by the processor, may cause the wearable electronic device to reduce the size of objects close to the connection part while scrolling the objects, based on identifying that the wearable electronic device is in the first state.

According to an embodiment, the instructions, when executed by the processor, may cause the wearable electronic device to identify a third object close to the connection part while scrolling the objects. According to an embodiment, the instructions, when executed by the processor, may cause the wearable electronic device to display at least one image representing at least one object corresponding to a next sequence of the third object in a display area corresponding to one end of the second display area or one end of the third display area.

According to an embodiment, the instructions, when executed by the processor, may cause the wearable electronic device to place at least one image representing the at least one object corresponding to the next order of the third object based on the order of the at least one object.

According to an embodiment, the user input may include a touch and drag or swipe on the flexible display, an input on the bezel of the wearable electronic device, or an input on the crown of the wearable electronic device.

According to an embodiment, in an operation method performed by a wearable electronic device including a flexible display, the flexible display may include a first display area corresponding to the body part of the wearable electronic device, a second display area corresponding to the first band part of the wearable electronic device, and a third display area corresponding to the second band part of the wearable electronic device, and the first band part may be configured to be connected to the second band part via the connection part 270 of the wearable electronic device. According to an embodiment, the method performed by the wearable electronic device may include an operation of displaying, via the flexible display, a list of objects arranged in a sequential order. According to an embodiment, the method performed by the wearable electronic device may include an operation of scrolling the objects in the list displayed on the flexible display, in response to a user input. According to an embodiment, the method performed by the wearable electronic device may include an operation of scrolling in a loop to indicate the beginning of the list following the end of the list, based on reaching the end of the list while scrolling the objects when the wearable electronic device is in a first state in which the first band is connected to the second band via the connection part. According to an embodiment, the method performed by the wearable electronic device may include an operation of stopping scrolling the objects based on reaching the end of the list while scrolling the objects when the wearable electronic device is in a second state in which the first band is separated from the second band via the connection part. According to an embodiment, the method performed by the wearable electronic device may further include an operation of displaying a first object corresponding to the beginning after a second object corresponding to the end, based on reaching the end of the list while scrolling the objects, when the wearable electronic device is in the first state and the direction of scrolling the objects is a forward direction with respect to the order of the list. According to an embodiment, the method performed by the wearable electronic device may further include an operation of displaying a second object corresponding to the end after a first object corresponding to the beginning, based on reaching the end of the list while scrolling the objects, when the wearable electronic device is in the first state and the direction of scrolling the objects is a reverse direction with respect to the order of the list.

According to an embodiment, the method performed by the wearable electronic device may further include an operation of displaying information indicating the end of the list on the flexible display based on reaching the end of the list while scrolling the objects.

According to an embodiment, the method performed by the wearable electronic device may further include an operation of reducing the size of objects close to the connection part while scrolling the objects, based on identifying that the wearable electronic device is in the first state.

According to an embodiment, a computer-readable non-temporary recording medium 130 or 330 may store instructions that may perform at least one of operations of displaying a list of objects arranged in a sequential order on the flexible display 250 or 350 included in the wearable electronic device 201, wherein the flexible display includes a first display area 251 corresponding to the body part 210 of the wearable electronic device, a second display area 252 corresponding to the first band part 272 of the wearable electronic device, and a third display area 253 corresponding to the second band part 273 of the wearable electronic device, and the first band part is configured to be connected to the second band part via the connection part of the wearable electronic device, scrolling the objects in the list displayed on the flexible display, in response to a user input, scrolling in a loop to indicate the beginning of the list following the end of the list, based on reaching the end of the list while scrolling the objects when the wearable electronic device is in a first state in which the first band is connected to the second band via the connection part, and stopping scrolling the objects based on reaching the end of the list while scrolling the objects when the wearable electronic device is in a second state in which the first band is separated from the second band via the connection part.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101 or 301). For example, a processor (e.g., the processor 320) of the machine (e.g., the electronic device 301) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{TM}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

## Claims

1. A wearable electronic device (201) comprising:
a body part (210);
a first band part (272);
a second band part (273);
a connection unit (270) configured to connect the first band part to the second band part;
a flexible display (250, 350), wherein the flexible display includes a first display area (251) corresponding to the body part (210), a second display area (252) corresponding to the first band part and a third display area (253) corresponding to the second band part;
a processor (320); and
memory (130, 330) storing instructions that, when executed by the processor, cause the wearable electronic device to:
display, via the flexible display, a list of objects arranged in a sequential order,
in response to a user input, scroll objects of the list displayed on the flexible display,
when the wearable electronic device is in a first state in which the first band part is connected to the second band part through the connection unit, based on an end of the list being reached while scrolling, scroll in a loop to display a beginning of the list subsequent to the end of the list, and
when the wearable electronic device is in a second state in which the first band part is separated from the second band part, based on an end of the list being reached while scrolling, stop scrolling the objects.

2. The wearable electronic device of claim 1, wherein a total size of all objects arranged in the sequential order related to the list is larger than a size of a display area of the flexible display.

3. The wearable electronic device of any one of claims 1 to 2, wherein the instructions, when executed by the processor, cause the wearable electronic device to:
when the wearable electronic device is in the first state and the direction of scrolling the objects is a forward direction with respect to an order of the list, based on an end of the list being reached while scrolling the objects, display a first object corresponding to the beginning of the list next to a second object corresponding to the end of the list, and
when the wearable electronic device is in the first state and a direction of scrolling the objects is a reverse direction with respect to the order of the list, based on an end of the list being reached while scrolling the objects, display a second object corresponding to the end of the list next to a first object corresponding to the beginning of the list.

4. The wearable electronic device of any one of claims 1 to 3, wherein the instructions, when executed by the processor, cause the wearable electronic device to:
based on an end of the list being reached while scrolling the objects, display, on the flexible display, information indicating the end of the list.

5. The wearable electronic device of any one of claims 1 to 4, wherein the instructions, when executed by the processor, cause the wearable electronic device to:
based on identifying that the wearable electronic device is in the first state, reduce a size of objects adjacent to the connection unit while scrolling the objects.

6. The wearable electronic device of any one of claims 1 to 5, wherein the instructions, when executed by the processor, cause the wearable electronic device to:
identify a third object adjacent to the connection unit while scrolling the objects, and
display, on a display area corresponding to an end of the second display area or an end of the third display area, at least one image indicating at least one object corresponding to a next order of the third object.

7. The wearable electronic device of any one of claims 1 to 6, wherein the instructions, when executed by the processor, cause the wearable electronic device to:
arrange, based on an order of the at least one object, at least one image indicating the at least one object corresponding to the next order of the third object.

8. The wearable electronic device of any one of claims 1 to 7, wherein the at least one image includes an icon or a text related to the at least one object.

9. The wearable electronic device of any one of claims 1 to 8, wherein the instructions, when executed by the processor, cause the wearable electronic device to:
display the at least one image in a size smaller than the third object.

10. The wearable electronic device of any one of claims 1 to 9, wherein the user input includes a touch and drag or a swipe on the flexible display, an input on the bezel of the wearable electronic device, or an input on a crown of the wearable electronic device.

11. An operation method performed by a wearable electronic device (201) including a flexible display (250, 350), wherein the flexible display includes a first display area (251) corresponding to the body part (210) of the wearable electronic device, a second display area (252) corresponding to the first band part (272) of the wearable electronic device, and a third display area (253) corresponding to the second band part (273) of the wearable electronic device, and the first band part is configured to be connected to the second band part via the connection part (270) of the wearable electronic device, the operation method comprising:
displaying, via the flexible display, a list of objects arranged in a sequential order;
scrolling objects of the list displayed on the flexible display, in response to a user input;
scrolling in a loop to display a beginning of the list subsequent to the end of the list, based on an end of the list being reached while scrolling when the wearable electronic device is in a first state in which the first band is connected to the second band via the connection part; and
stopping scrolling the objects based on an end of the list being reached while scrolling when the wearable electronic device is in a second state in which the first band is separated from the second band via the connection part.

12. The operation method of claim 11, wherein a total size of all objects arranged in the sequential order related to the list is larger than the size of the display area of the flexible display.

13. The operation method of any one of claims 11 to 12, further comprising:
displaying a first object corresponding to the beginning of the list next to a second object corresponding to the end of the list, based on an end of the list being reached while scrolling the objects, when the wearable electronic device is in the first state and the direction of scrolling the objects is a forward direction with respect to an order of the list; and
displaying a second object corresponding to the end of the list next to a first object corresponding to the beginning of the list, based on an end of the list being reached while scrolling the objects, when the wearable electronic device is in the first state and a direction of scrolling the objects is a reverse direction with respect to the order of the list.

14. The operation method of any one of claims 11 to 13, further comprising displaying, on the flexible display, information indicating the end of the list, based on an end of the list being reached while scrolling the objects.

15. The operation method of any one of claims 11 to 14, further comprising reducing a size of objects adjacent to the connection part while scrolling the objects, based on identifying that the wearable electronic device is in the first state.
